# EUROPÄISCHE PATENTANMELDUNG

(11) **EP 0 650 922 A1**
(43) Veröffentlichungstag der Anmeldung: **03.05.1995**
(21) Anmeldenummer: 94115916.2
(22) Anmeldetag: 08.10.1994
(51) Int. Cl.: C01B 3/58

(54) **Verfahren zur katalytischen Entfernung von CO in H2-reichem Gas**

(30) Priorität: 14.10.1993 DE 4334983
(71) Anmelder: DAIMLER-BENZ AKTIENGESELLSCHAFT, D-70567 Stuttgart (DE)
(72) Erfinder: Plog, Carsten, Dr., D-88677 Markdorf (DE); Maunz, Werner, D-88677 Markdorf (DE); Stengel, Thomas, Dipl.-Ing., D-88045 Friedrichshafen (DE); Andorf, Renato, Dr., D-88074 Meckenbeuren (DE)

(57) **Zusammenfassung**

Die Erfindung betrifft ein mehrstufiges Verfahren zur Entfernung von Kohlenmonoxid in wasserstoffreichem Gas durch eine Oxidation oder Methanisierung des CO an edelmetallhaltigen selektiven Oxidations- oder Methanisierungskatalysatoren unter Luftzuspeisung.

## Beschreibung

Die Erfindung betrifft ein Verfahren zur selektiven katalytischen Entfernung von CO in wasserstoffreichem Gas. Anwendung findet ein solches Verfahren z.B. für die CO-Entfernung aus dem Abgas eines Reformers, um das Abgas als Reaktionsstoff für eine Brennstoffzelle aufzubereiten.

Die katalytische Entfernung von CO in H₂-reicher Atmosphäre wird in der Technik überwiegend durch Wassergas-Shift-Reaktion, Methanisierung oder selektive Oxidation von CO in einstufigen Festbettreaktoren an entsprechenden selektiven Katalysatoren durchgeführt. Der katalytische Feststoff liegt dabei in Form von Pellets oder Kugeln als Schüttung im Reaktionsrohr vor.

Die bekannten einstufigen Reaktoren haben den Nachteil, daß es nicht möglich ist, CO-Eingangskonzentrationen von über 1 Vol-% unter dynamischen Betriebsbedingungen, d.h. bei veränderlichen CO-Eingangskonzentrationen, ohne geregelte Luftdosierung auf Konzentrationen unter 40 ppm abzubauen. Eine Regelung der Luftzuspeisung sollte jedoch auf Grund der damit verbundenen hohen technischen Anforderung an die Meß- und Regeltechnik vermieden werden. Mit einem mehrstufigen Reaktor kann zudem ein durch hohe CO-Konzentrationen verursachter zeitlich träger Umsatzverlauf der ersten Stufe in der folgenden Stufe, in der nur noch niedrige CO-Konzentrationen vorliegen, ausgeglichen werden. Weiterhin wird durch die zusätzliche Luftzuspeisung zwischen den einzelnen Stufen eine erneute Bildung von CO durch die Wassergas-Shift-Reaktion (CO₂ + H₂ --> CO + H₂O) unterdrückt.

Der Erfindung liegt die Aufgabe zugrunde, ein Verfahren zur selektiven katalytischen Entfernung von CO aus H₂-reichem Gas zu schaffen, mit dem unter dynamischen Betriebsbedingungen ohne konzentrationsabhängige Regelung der Luftzuspeisung eine sehr geringe CO-Restkonzentration (< 40ppm) erreicht werden kann.

Diese Aufgabe wird mit den Verfahren nach Patentanspruch 1 gelöst. Vorteilhatte Ausführungen der Erfindungen sind Gegenstand weiterer Ansprüche.

Erfindungsgemäß wird die CO-Entfernung in H₂-reicher Atmosphäre in einem katalytischen Mehr-Stufen-Reaktor mit mindestens zwei Stufen durchgeführt. Die einzelnen Reaktionsstufen sind im Hinblick auf mindestens eine der Bestimmungsgrößen Reaktorlänge, Reaktor-Durchmesser, Katalysatorschichtdicke, CO:O₂-Stöchiometrie an die CO-Eingangskonzentration der betreffenden Stufe angepaßt.

Bei einer bevorzugten Ausführung mit zwei CO-Oxidationsstufen wird in der ersten Stufe durch Luftzuspeisung CO an einem an sich bekannten selektiven Edelmetall-Oxidationskatalysator , z.B. Pt(5 ma-%)/Al₂O₃ zu CO₂ oxidiert. Die CO-Eingangskonzentration von bis zu 2 Vol-% wird dabei auf 500 bis 3000 ppm reduziert. In der zweiten Stufe wird durch zusätzliche Luftzuspeisung an dem bezeichneten selektiven Oxidationskatalysator die Restkonzentration von bis zu 3000 ppm durch selektive CO-Oxidation auf unter 40 ppm abgebaut. Höhere CO-Eingangskonzentrationen (> 2 Vol-%) können durch eine Erhöhung der Reaktionsstufenzahl entsprechend reduziert werden.

Die selektive Oxidation läuft nach folgender Reaktion ab:

CO + 0,5 O₂ ---> CO₂.

Abhängig von der Arbeitstemperatur werden vorteilhaft die folgenden edelmetallhaltigen, selektiven CO-Oxidationskatalysatoren verwendet:
**90**^{**o**} **- 120**^{**o**}**:**
Pt/Al₂O₃, Ru/Al₂O₃
insbesondere: Pt(5 ma-%)/Al₂O₃ z.B. in Form von Pulvern auf Metallträgern Ru(0.44 ma-%)/Al₂O₃ z.B. in Form von Pellets
**140**^{**o**} **- 160**^{**o**}
Pt/Al₂O₃, insbesondere: Pt(0,3 ma-%)/Al₂O₃ z.B. in Form von Kugeln
**200**^{**o**} **- 230**^{**o**}
Pt-Zeolith, insbesondere Pt(1 ma-%)NaY, das als Extrudat vorliegt.

Vorteilhaft kann eine der CO-Oxidationsstufen durch eine Methanisierungsstufe, bei der eine Methanisierung an einem an sich bekannten selektiven Methanisierungskatalysator erfolgt, ersetzt werden. Die Methanisierungsstufe kann mit und ohne zusätzlicher Luftzuspeisung betrieben werden. Ohne Luftzuspeisung läuft alleine die Methanisierung von CO ab; wird dagegen Luft zudosiert, laufen CO-Oxidation und Methanisierung nebeneinander ab. Bei der Methanisierung laufen die folgenden Reaktionen ab:

CO + 3 H₂ ---> CH₄ + H₂O

2 CO + 2 H₂ ---> CH₄ + CO₂.

Die Zudosierung von Luft erfolgt unabhängig von der CO-Eingangskonzentration. Sie kann jedoch lastabhängig, z.B. proportional zur CO-Eingangsmenge gewählt werden.

Als selektiver Methanisierungskatalysator wird vorteilhaft Ru/Al₂O₃, insbesondere Ru(0.44 ma-%)/Al₂O₃ z.B. in Form von Pellets verwendet.

Durch die Anwendung des erfindungsgemäßen mehrstufigen Verfahrens können unter dynamischen Bedingungen sich zeitlich ändernde CO-Konzentrationen ohne gesonderte CO-konzentrationsabhängig geregelte Luftdosierung auf unter 40 ppm reduziert werden. Dabei ist die Anzahl der Reaktionsstufen der CO-Eingangskonzentration anzupassen.

Bei der Ausführung mit hintereinandergeschalteten selektiven CO-Oxidationsstufen werden zeitlich schwankende CO-Ausgangskonzentrationen der vorhergehenden Stufe im dynamischen Betrieb durch Zuspeisung eines hohen Luftüberschusses (abhängig von der Eingangs-CO-Konzentration der 2. Stufe ist das Verhältnis O:CO ≧ 2) in der nachfolgenden Stufe auf unter 40 ppm reduziert.
Bei Anwendung eines Methanisierungsreaktors als nachfolgender Reaktionsstufe kann auf eine zusätzliche Luftdosierung verzichtet werden, wobei jedoch dadurch der Bereich der zulässigen Betriebstemperaturen eingeengt wird.

Die beschriebenen Verfahrensvarianten eignen sich insbesondere zur CO-Entfernung aus dem Abgas eines CH₃OH-Reformers, das als Reaktionsstoff für Brennstoffzellen verwendet wird. Besonders vorteilhaft werden sie unter nicht-stationären Bedingungen, wie sie beim Einsatz von Brennstoffzellen in Personen- und Nutzfahrzeugen vorherrschen, angewandt. Sie können aber auch für Stromerzeugungsaggregate, bei denen Brennstoffzellen verwendet werden, genutzt werden.

Die Erfindung wird im folgenden mit Hilfe von Fig. näher erläutert.

Es zeigen:
- Fig. 1, 2: Diagramme zu den experimentell erreichten CO-Ausgangskonzentrationen;
- Fig. 3: eine schematische Darstellung der beiden erfindungsgemäßen Verfahren;
- Fig. 4: Diagramme zu experimentell erreichten CO-Ausgangskonzentrationen mit verschiedenen Beschichtungsmassen;
- Fig. 5: Ausführungsbeispiel für Mehrstufen-Reaktor.

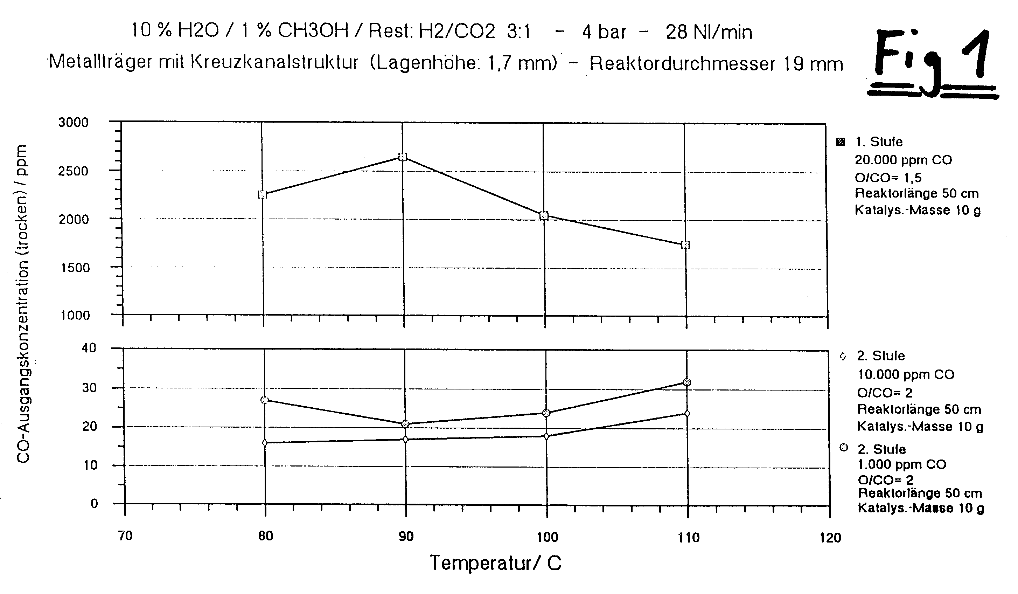

In Fig. 1 sind Ergebnisse dargestellt, die für einen 2-stufigen selektiven CO-Oxidator mit katalytisch beschichteten Kreuzkanalmetallträgern (Lagenhöhe 1,7 mm) einzeln für jede Stufe ermittelt wurden. Als Katalysator wurde Pt(5 ma-%)/Al₂O₃ verwendet. Der Reaktordurchmesser betrug in beiden Stufen 19 mm.
Das Eingangsgas wies neben CO und Luft folgende Zusammensetzung auf: 10% H₂0, 1% CH₃OH, Rest H₂/CO₂ im Verhältnis 3:1. An der Ordinate sind die CO-Ausgangskonzentrationen in ppm für die betreffende Stufe aufgetragen. An der Abszisse ist die Temperatur in ^{o}C aufgetragen.
Wie man im oberen Teilbild erkennt, kann in der ersten Stufe die CO-Eingangskonzentration von 20 000 ppm auf 1700 bis 2700 ppm reduziert werden. In der zweiten Stufe (unteres Teilbild) wird diese Ausgangskonzentration der ersten Stufe nochmals auf unter 40 ppm abgebaut. Als mögliche Eingangskonzentrationen der zweiten Stufe wurden im Experiment 10.000 ppm (Meßpunkte in Rautenform dargestellt) und 1000 ppm (Meßpunkte in Kreisform dargestellt) gewählt.

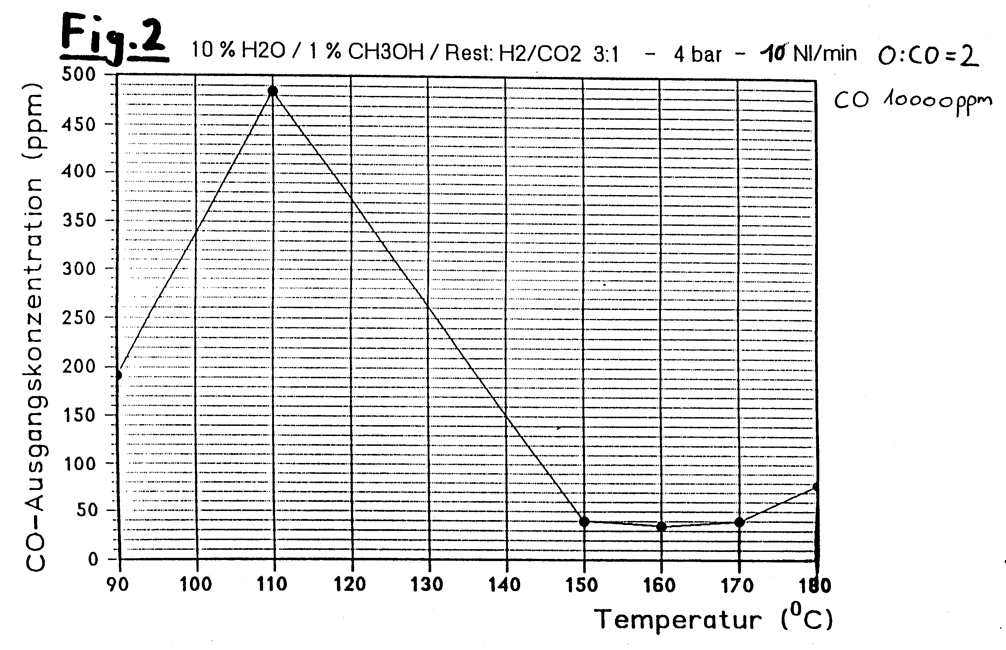

In Fig. 2 sind die erzielten CO-Ausgangskonzentrationen (Ordinate) im Temperaturbereich von 90 bis 180 ^{o}C (Abszisse) bei Einsatz eines 2-Stufen-Reaktors mit einer Oxidationsstufe (1. Stufe) und einer Methanisierungsstufe (2. Stufe) ohne zusätzliche Luftzuspeisung dargestellt. Die CO-Eingangskonzentration betrug 10 000 ppm.
Wie man der Darstellung entnimmt, kann mit dem erfindungsgemäßen Verfahren im Temperaturbereich zwischen 150 und 170 ^{o}C die CO-Eingangskonzentration auf unter 40 ppm reduziert werden. Als selektiver CO-Oxidationskatalysator wurden Pt(0,3 ma-%)/Al₂O₃ - Pellets mit einer Gesamtmasse von 65 g verwendet. Als selektiver Methanisierungskatalysator wurden Ru(0,44 ma-%)/Al₂O₃-Pellets mit einer Gesamtmasse von 270 g verwendet. Der Reaktordurchmesser betrug in beiden Stufen 30 mm.

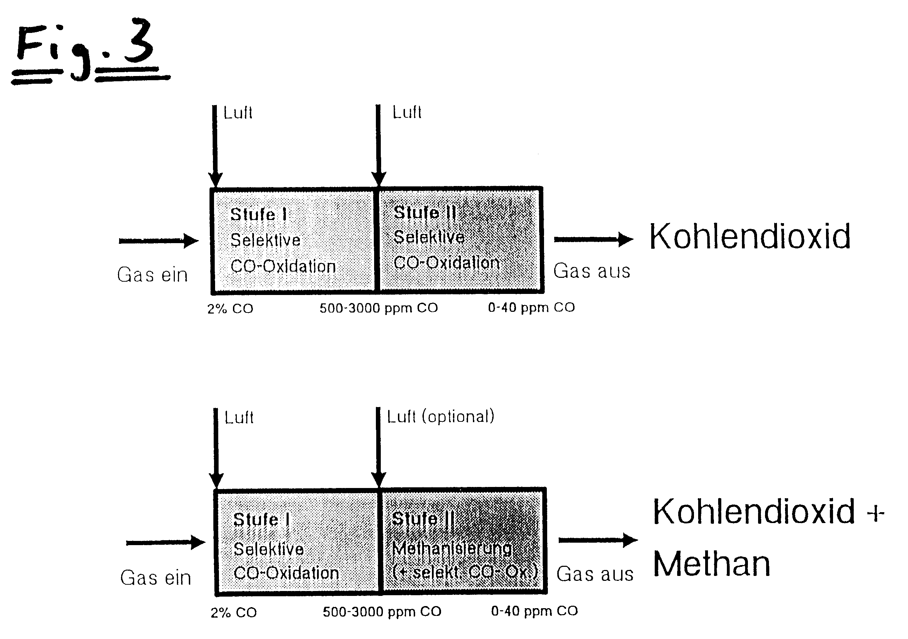

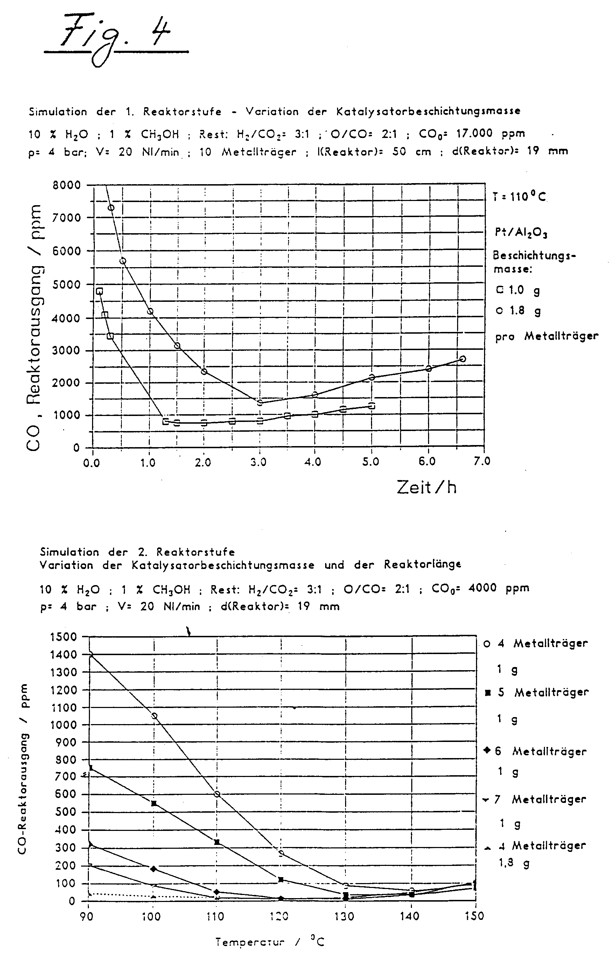

In Fig. 3 sind zwei bevorzugte Ausführungsformen des erfindungsgemäßen Verfahrens schematisch dargestellt. Die CO-Konzentrationen am Eingang und nach den einzelnen Verfahrensstufen sind jeweils dargestellt. Oben ist ein zweistufiges Verfahren abgebildet, wobei in jeder Stufe eine selektive CO-Oxidation an einem Oxidationskatalysator erfolgt.
Unten ist ebenfalls ein zweistufiges Verfahren abgebildet, wobei in der ersten Stufe eine selektive CO-Oxidation an einem Oxidationskatalysator stattfindet, und in der zweiten Stufe eine Methanisierung an einem selektiven Methanisierungskatalysator erfolgt. Jede Reaktorstufe ist jeweils hinsichtlich der katalytischen Beschichtungsmasse und der Reaktorlänge auf die entsprechenden Reaktionsbedingungen optimiert. Dieses ist beispielhaft für einen 2-Stufen-Reaktor zur CO-Oxidation in Fig. 4 gezeigt. In der ersten Reaktionsstufe, in der eine CO-Eingangskonzentration von 17.000 ppm vorliegt, können bei Verwendung von zehn Metallträgern mit der niedrigeren Beschichtungsmasse von 1,0 g/Metallträger höhere CO-Umsätze erzielt werden als mit einer Auftragsmasse von 1,8 g/Metallträger. In der folgenden Reaktionsstufe (CO = 4000 ppm) dagegen werden höchste Umsätze bei Verwendung von vier Metallträgern mit einer Beschichtungsmasse von
jeweils 1,8 g erzielt.

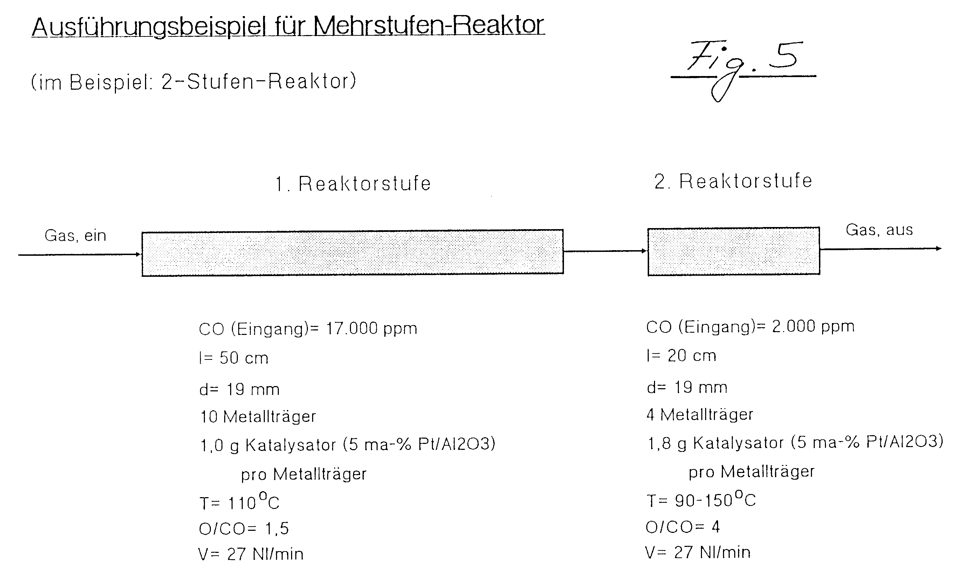

In Fig. 5 ist ein Ausführungsbeispiel des Mehrstufenkonzepts (im Beispiel: 2-Stufen-Reaktor zur CO-Oxidation) gezeigt. Die erste Reaktorstufe, in der eine CO-Eingangskonzentration von 17.000 ppm vorliegt, hat eine Länge von 50 cm, einen Durchmesser von 19 mm und wird bei 110°C und einem O/CO-Verhältnis von 1,5 mit 10 Metallträgern mit einer jeweiligen Beschichtungsmasse von 1,0 g betrieben. Die zweite Reaktionsstufe weist eine Länge von nur 20 cm und einen Durchmesser von 19 mm auf. Sie wird bei 90 bis 150° C und einem O/CO-Verhältnis von 4 mit 4 Metallträgern mit einer Auftragsmasse von jeweils 1,8 g betrieben.

## Patentansprüche

1. Verfahren zur Entfernung von Kohlenmonoxid in wasserstoffreichem Gas durch eine Oxidation des CO an einem edelmetallhaltigen selektiven Oxidationskatalysator unter Luftzuspeisung, **dadurch gekennzeichnet,** daß die Oxidations-Reaktion in mindestens zwei Stufen durchgeführt wird, wobei die einzelnen Stufen im Hinblick auf Reaktorlänge, Reaktor-Durchmesser, Katalysatorschichtdicke` CO:O₂-Stöchiometrie an die CO-Eingangskonzentration der jeweiligen Stufe angepaßt sind.

2. Verfahren nach Anspruch 1, **dadurch gekennzeichnet,** daß mindestens eine der CO-Oxidationsstufen durch eine Methanisierungsstufe, bei der eine Methanisierung des CO an einem selektiven Methanisierungskatalysator erfolgt, ersetzt wird.

3. Verfahren nach Anspruch 2, **dadurch gekennzeichnet,** daß die Methanisierung unter Luftzuspeisung erfolgt, so daß neben der Methanisierung eine Oxidation des CO erfolgt.

4. Verfahren nach einem der vorangehenden Ansprüche, **dadurch gekennzeichnet**, daß die Luftzuspeisung unabhängig von der CO-Eingangskonzentration erfolgt.

5. Verfahren nach einem der vorangehenden Ansprüche **dadurch gekennzeichnet**, daß der edelmetallhaltige selektive Oxidationskatalysator Pt/Al₂O₃ oder Ru/Al₂O₃ oder Pt-Zeolith ist.

6. Verfahren nach einem der vorangehenden Ansprüche, **dadurch gekennzeichnet**, das der selektive Methanisierungskatalysator Ru/Al₂O₃ ist.
